# EUROPEAN PATENT SPECIFICATION

(11) **EP 1 150 828 B1**
(45) Date of publication and mention of the grant of the patent: **23.07.2003**
(21) Application number: 00901265.9
(22) Date of filing: 02.02.2000
(51) Int. Cl.: B29C 70/52

(54) **FIBRE REINFORCED COMPOSITES AND METHOD OF MAKING SAME**
FASERVERSTÄRKTE VERBUNDWERKSTOFFE UND VERFAHREN ZU DEREN HERSTELLUNG
COMPOSITES RENFORCES DE FIBRES ET LEUR PROCEDE DE FABRICATION

(30) Priority: 08.02.1999 GB 9902584
(43) Date of publication of application: 07.11.2001
(73) Proprietor: Airbus UK Limited, Bristol, BS99 7AR (GB)
(72) Inventor: GRAY, Ian Lindsay, BAE Systems, Bristol, Avon BS99 7AR (GB)
(74) Representative: Edis, Ronald Malcolm
(86) International application number: GB0000286
(87) International publication number: WO00047397

(56) References cited:
- US-A- 4 605 254
- US-A- 5 439 215

## Description

This invention relates to fibre reinforced composites, in particular those used in high strength applications such as aircraft structures.

It is known to manufacture by pultrusion, composite structural members for use as skin stringers for aircraft wing and fuselage skins, for example. Such pultruded members are currently manufactured by drawing reinforcing fibres, such as carbon fibres, through a die, applying liquid plastics matrix material to the fibres, and curing or setting the whole to form a fibre reinforced composite structural member of the required cross-sectional shape and of indefinite length. Patent US 5,439,215 discloses a method for producing pultruded hockey sticks and similar products where the hockey stick shaft varies in flex from the upper portion of the shaft to the lower portion of the shaft by varying the rate of feeding fibres through the pultrusion machine.

There exists a requirement to provide structural members such as aircraft wing or fuselage skin stringers with strength characteristics which vary along their length. It is currently proposed to provide such a member with variable cross-section in order to achieve the variation in strength required. Unfortunately such changes in cross-sectional shape for pultruded members are not easy to achieve. Currently variable shape pultrusion dies are being investigated with a view to allowing changes in cross-sectional shape of the structural member along its length. It will be appreciated that such variable cross-section dies will be somewhat complex and possibly difficult to produce. In addition their reliability and/or longevity may be limited.

According to the present invention there is provided a method of producing a fibre reinforced composite by pultrusion having strength characteristics which vary along the length of the composite, the method having the steps disclosed in the independent claim 1.

Furthermore, the invention concerns a composite structure and an aircraft aerofoil according to claims 9 and 11.

By "tenacity" is meant tensile strength per unit area of fibre. In this way a higher tenacity fibre may have a reduced cross sectional area compared with a lower tenacity fibre. By "modulus" is meant Young's modulus for the fibre concerned.

Preferably, the additional fibres are either spliced between discrete lengths of the reinforcing fibres, or interlaced or otherwise distributed amongst continuous said reinforcing fibres.
The fibres may be pre-impregnated with the plastics material before being drawn through the protrusion die. If the fibres are not pre-impregnated then a plastics material may be introduced amongst the fibres as they are drawn through the die. Where the plastics material is curable, the pultrusion die may be heated to effect curing or part curing of the plastics material.

The fibres may be in the form of individual strands, or may form woven and/or non-woven webs.

A method in accordance with the invention will now be described by way of example, and with reference to the accompanying drawings in which:
**Figure 1** is a diagrammatic view of an apparatus for splicing fibres for use in a method in accordance with the invention;
**Figure 2a** is an alternative enlarged diagrammatic view of box A in Figure 1;
**Figure 2b** is an enlarged diagrammatic view of box A in Figure 1; and
**Figure 3** is a diagrammatic view of a pultrusion apparatus for producing a fibre reinforced composite in accordance with the invention.

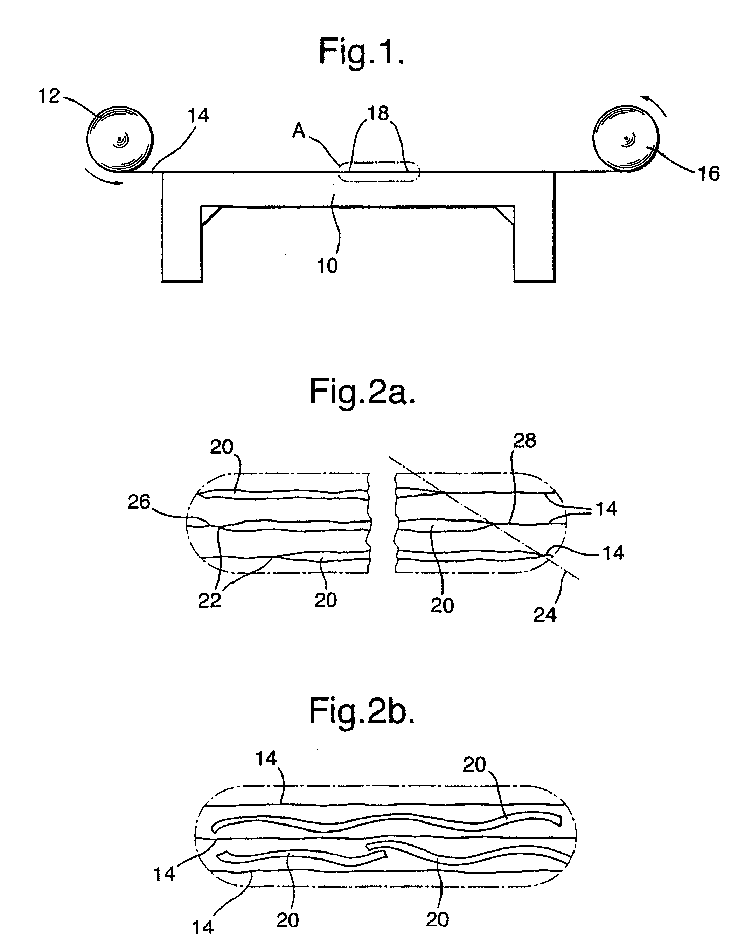

Figure 1 shows an apparatus for splicing fibres and comprises a substantially horizontal work bench 10, a source roll 12 of reinforcing fibres 14 and a product receiving roll 16.

Reinforcing fibres 14 are drawn off the source roll 12, across the work bench 10 and wound onto the product receiving roll 16.

Additional fibres 20 are provided which can either be spliced between lengths 26, 28 of the reinforcing fibres (Figure 2a) to provide an area 18 having a characteristic such as tenacity or modulus different from that of the fibres 14, or can be interlaced or otherwise distributed amongst the reinforcing fibres 14 (Figure 2b).

When the additional fibres 20, are spliced into the reinforcing fibres 14 as shown in Figure 2a, the ends of the fibres may either be knotted together or air blown so that the fibres become matted together to form a joint 22. It should be noted that the joint 22 so formed primarily allows continuity of the pultrusion process.

It should be further noted that it is preferable for the introduction of a change in fibre type to be phased over the predetermined area or areas 18. By phasing the introduction of the additional fibres, stress on individual joints between the fibres is spread over a greater area thus minimising stress concentration.

In Figure 2a it will be noted that the phased introduction leads to the additional fibres 20 meeting the reinforcing fibres 14 on an oblique plane 24 although it will be understood that other suitable phased introduction, e.g. a zig-zag, could be used.

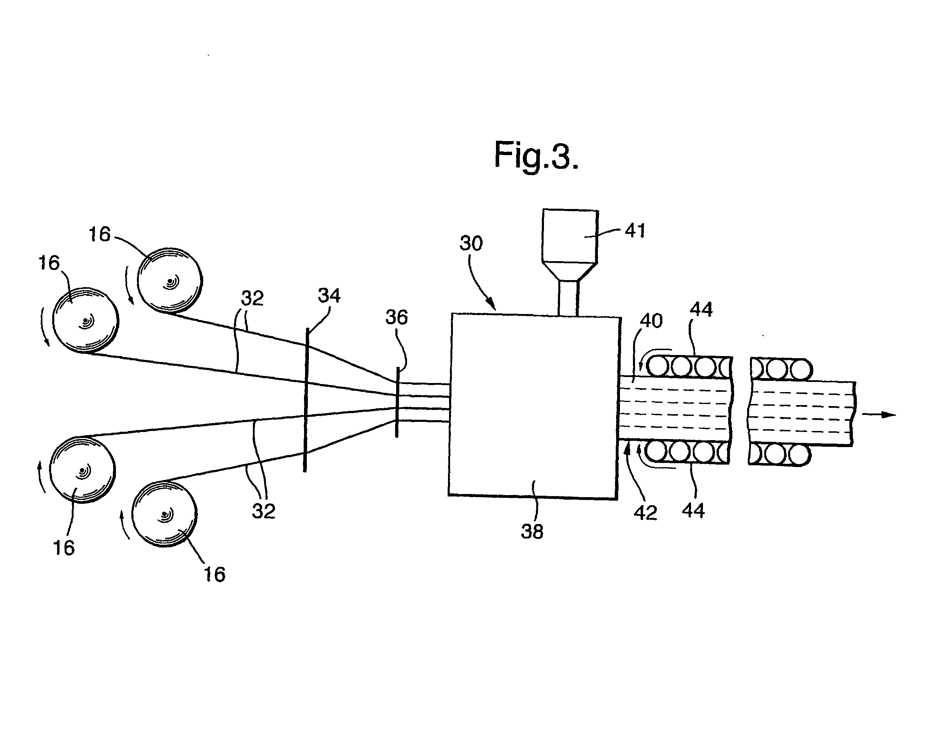

The product receiving roll 16 is then transferred to a pultruding apparatus 30 as shown in Figure 3. The pultruding apparatus 30 includes supports (not shown) for a number of product receiving rolls 16. In the present example, four rolls 16 are carried by the supports. The modified fibres, indicated at 32, are drawn from the rolls 16 and aligned through guide vanes 34 and 36 so as to position them in a predetermined pattern.

The modified fibres 32 are then pulled through a pultrusion die 38. Resin 40 from a supply 41 is injected amongst the fibres 32 as they are drawn through the die 38 to produce a fibre reinforced composite 42 of substantially constant cross-sectional area. The fibre reinforced composite 42 is part drawn out through the die 38 by reciprocating caterpillar pullers 44.

Where the additional fibres 20 are distributed amongst the reinforcing fibres 14 as in Figure 2b there is a reduction in the ratio of fibre 32 to resin 40 content of the final composite 42 compared to the composition in which the fibres are spliced as shown in Figure 2a.

The fibres 32 may also be pre-impregnated with resin before drawing them through the pultrusion die 38. That may alleviate, or avoid altogether, the need to inject resin 40 amongst the fibres 32 as they are pulled through the die 38.

The fibres 32 may be in the form of a fabric, which may be woven and/or non-woven.

If the resin is curable, the pultrusion die 38 may be heated to effect curing or part curing of the resin.

In the present example, the plastics matrix material used is a resin, although it may also be any adhesive/matrix system.

The length of the predetermined area 18 along the fibres 14 can be selected as required.

The above methods enable the production of a fibre reinforced composite having variable strength characteristics along its length without alteration of the cross-sectional area of the pultruded composite.

## Claims

1. A method of producing a fibre reinforced composite by pultrusion having variable strength characteristics along its length including the steps of drawing through a pultrusion die (38) a series of reinforcing fibres (32) to form a pultruded fibre composite product (42), applying a plastics matrix material (40) around the fibres and allowing the matrix material to solidify to form the finished composite (40), the method being **characterised by** incorporating in the reinforcing fibres (14) prior to the pultrusion step additional fibres (20) having a characteristic different from that of the said reinforcing fibres (14) in order to vary the strength characteristics of the final product (42) substantially without altering the cross-sectional area thereof.

2. A method according to claim 1 in which the said characteristic is selected from the group fibre tenacity and fibre modulus.

3. A method according to claim 1 or 2 in which the additional fibres (20) are spliced between discrete lengths (26, 28) of the reinforcing fibres (14).

4. A method according to claim 1 or 2 in which the additional fibres (20) are interlaced amongst continuous said reinforcing fibres (14).

5. A method according to any of claims 1 to 4 in which the plastics matrix material (40) is applied to the fibres, within the die (38).

6. A method according to any of claims 1 to 4 in which the fibres (32) are pre-impregnated with a plastics matrix material (40) before being drawn through the die (38).

7. A method according to any preceding claim in which the fibres (14) are in the form of a woven web.

8. A method according to any one of claims 1 - 6 in which the fibres (14) are in the form of a non-woven web.

9. A composite structural member (42) produced according to the method of any preceding claim.

10. A composite structural member (42) according to claim 9 comprising an aircraft skin stringer.

11. An aircraft aerofoil incorporating a composite structural member (42) according to claim 9 or 10.

## Patentansprüche

1. Verfahren zur Erzeugung eines faserverstärkten Verbundwerkstoffs durch Zieh-Strangpressen, wobei der Werkstoff über seine Länge unterschiedliche Festigkeitscharakteristiken besitzt, wobei durch eine Zieh-Strangpressform (38) eine Reihe von Verstärkungsfasem (32) gezogen wird, um ein durch Zieh-Strangpressen erzeugtes Faserverbundwerkstoff-Erzeugnis (42) zu erzeugen, worauf ein Plastikmatrixmaterial (40) um die Fasern herum gelegt wird, um sie zu erhärten und den fertigen Verbundwerkstoff (40) zu erzeugen, wobei das Verfahren **dadurch gekennzeichnet ist, dass** in die Verstärkungsfasern (14) vor dem Zieh-Strangpress-Schritt zusätzliche Fasern (20) mit einer Charakteristik eingeführt werden, die von jener der Verstärkungsfasern (14) unterschieden ist, damit die Festigkeitscharakteristiken des Endproduktes (42) im Wesentlichen ohne Änderung der Querschnittsfläche verändert werden.

2. Verfahren nach Anspruch 1, bei welchem die Charakteristiken aus der Gruppe von Faserfestigkeit und Fasermodul ausgewählt werden.

3. Verfahren nach den Ansprüchen 1 oder 2, bei welchem die zusätzlichen Fasern (20) zwischen diskrete Längen (26, 28) der Verstärkungsfasern (14) eingespleißt werden.

4. Verfahren nach den Ansprüchen 1 oder 2, bei welchem die zusätzlichen Fasern (20) mit den kontinuierlichen Verstärkungsfasern (14) verflochten werden.

5. Verfahren nach einem der Ansprüche 1 bis 4, bei welchem das Plastikmatrixmaterial (40) innerhalb der Form (38) auf die Fasern aufgebracht wird.

6. Verfahren nach einem der Ansprüche 1 bis 4, bei welchem die Fasern (32) mit einem Plastikmaterial (40) vorimprägniert werden, bevor sie durch die Form (38) gezogen werden.

7. Verfahren nach einem der vorhergehenden Ansprüche, bei welchem die Fasern (14) in Form eines verwebten Stoffes vorliegen.

8. Verfahren nach einem der Ansprüche 1 bis 6, bei welchem die Fasern (14) in Form eines nicht verwebten Stoffes vorliegen.

9. Verbundwerkstoff-Gegenstand (42), welcher nach dem Verfahren gemäß einem der vorhergehenden Ansprüche hergestellt wurde.

10. Verbundwerkstoff-Gegenstand (42) nach Anspruch 9, der als Flugzeugholm für die Beplankung ausgebildet ist.

11. Flugzeug-Tragflügel mit einem Verbundwerkstoff-Gegenstand (42) nach einem der Ansprüche 9 oder 10.

## Revendications

1. Un procédé de production par pultrusion d'un composite renforcé par des fibres ayant des caractéristiques de résistance variables sur sa longueur, comportant les étapes consistant à tirer une série de fibres de renforcement (32) à travers une filière de pultrusion (38) afin de former un produit composite à fibres pultrudé (42), à appliquer une matière plastique à phase dispersée (40) autour des fibres et à permettre à la matière à phase dispersée de se solidifier afin de former le composite fini (40), le procédé étant **caractérisé en ce que** sont incorporées dans les fibres de renforcement (14), avant l'étape de pultrusion, des fibres additionnelles (20) ayant une caractéristique différente de celle desdites fibres de renforcement (14) afin de faire varier les caractéristiques de résistance du produit final (42) substantiellement sans altérer l'aire de sa section transversale.

2. Un procédé selon la revendication 1 dans lequel ladite caractéristique est sélectionnée dans le groupe ténacité des fibres/module des fibres.

3. Un procédé selon la revendication 1 ou la revendication 2 dans lequel les fibres additionnelles (20) sont épissées entre des longueurs discrètes (26, 28) des fibres de renforcement (14).

4. Un procédé selon la revendication 1 ou la revendication 2 dans lequel les fibres additionnelles (20) sont entrelacées parmi lesdites fibres de renforcement (14) continues.

5. Un procédé selon n'importe lesquelles des revendications 1 à 4 dans lequel la matière plastique à phase dispersée (40) est appliquée sur les fibres, à l'intérieur de la filière (38).

6. Un procédé selon n'importe lesquelles des revendications 1 à 4 dans lequel les fibres (32) sont préimprégnées d'une matière plastique à phase dispersée (40) avant d'être tirées à travers la filière (38).

7. Un procédé selon n'importe quelle revendication précédente dans lequel les fibres (14) se présentent sous la forme d'un voile tissé.

8. Un procédé selon n'importe laquelle des revendications 1 à 6 dans lequel les fibres (14) se présentent sous la forme d'un voile non tissé.

9. Un élément structural composite (42) produit selon le procédé de n'importe quelle revendication précédente.

10. Un élément structural composite (42) selon la revendication 9 comprenant une lisse de revêtement pour aéronef.

11. Une surface portante d'aéronef incorporant un élément structural composite (42) selon la revendication 9 ou la revendication 10.
